# EUROPEAN PATENT SPECIFICATION

(11) **EP 1 654 087 B1**
(45) Date of publication and mention of the grant of the patent: **30.10.2013**
(21) Application number: 04769107.6
(22) Date of filing: 06.08.2004
(51) Int. Cl.: B23K 26/20, B23K 26/16, B23K 26/32

(54) **METHOD OF LASER WELDING COATED MEMBERS**
VERFAHREN ZUM LASERSCHWEISSEN VON BESCHICHTETEN GLIEDERN
METHODE DE SOUDAGE AU LASER D'ELEMENTS ENROBES

(30) Priority: 12.08.2003 US 494610 P
(43) Date of publication of application: 10.05.2006
(73) Proprietor: MAGNA INTERNATIONAL INC, Aurora, Ontario L4G 7K1 (CA)
(72) Inventor: HILL, John, Edward, St. Thomas, Ontario N5R 4X7 (CA)
(74) Representative: Hössle Patentanwälte Partnerschaft
(86) International application number: PCT/IB2004/002528
(87) International publication number: WO 2005/014215

(56) References cited:
- EP-A- 0 454 861
- WO-A1-90/11161
- DE-A1- 4 407 190
- DE-A1- 10 112 744
- JP-A- 8 141 761
- JP-A- 11 226 765
- JP-A- 2001 162 388
- JP-A- 2002 361 458
- JP-A- 2003 334 681
- US-A- 5 104 032
- US-A- 5 626 776
- US-B2- 6 528 756
- US-B2- 6 528 756
- GRAHAM M P ET AL: "ND:YAG LASER BEAM WELDING OF COATED STEELS USING A MODIFIED LAP JOINT GEOMETRY" WELDING JOURNAL, AMERICAN WELDING SOCIETY, MIAMI, FL, US, vol. 75, no. 5, 1 May 1996 (1996-05-01), pages 162-S-170-S, XP000622042 ISSN: 0043-2296

## Description

### Field of the Invention

The present invention relates to a method of laser welding sheet metal having a layer of a coating material.

### Description of Related Art

The automotive industry uses a variety of coated or galvanized products to increase the durability of vehicle structures. Weld joints are generally made by spot welding to join together the parts. Through the use of a high powered laser for welding, joints can be made more quickly and with better quality than other alternative joining techniques. In addition, the advantage of having a single side access, as opposed to requiring access to both sides of a work piece for conventional joining techniques, as well as no direct contact with the work piece make laser welding a desirable welding technique.

According to general laser welding practice, two sheets that are to be joined are held together contacting each other along the area to be joined. A laser beam is then energized and swept across the area to be joined welding the sheets together by smelting or melting the metal in the area swept by the laser beam.

A common problem associated with welding coated or galvanized sheet metal includes the vaporization of the zinc galvanized coating resulting in zinc gas explosion leading to a poor weld having defects or pits weakening the joints and creating a visually unacceptable part.

Removal of the protective coating in the weld joint area is an unacceptable alternative to avoid the zinc gas problem discussed above. By removing the galvanized coating, the weld joint would be susceptible to corrosion by external elements, such as the weather, resulting in a shortened life span of a part. Therefore, there is a need in the art for a method of joining galvanized or coated metals using a laser welding technique that results in robust welds without surface defects. There is also a need for a method of laser welding coated metal sheets that is economic and easy to perform without removing a substantial portion of the protective coating resulting in a less corrosion resistant part.

JP 2002 361458 A discloses a method for a lap welding of zinc-based plated steel plates, wherein vapor pressure of zinc generated in the laser welding is decreased to prevent a weld defect when the zinc-based plated steel plates are lapped and welded with the laser beam. Metals having high corrosion resistance are dispersedly attached between inner surfaces of the lapped plates with a thermal spray method in order to suppress the decrease in the corrosion resistance due to a gap provided at the time of welding.

EP 0 454 861 A1 relates to a laser welding method for zinc-plated steel sheets for welding the zinc-plated steel sheets to one another by laser. An intermediate layer for limiting the evaporation of zinc is formed between the zinc-plated steel sheets, wherein the intermediate layer is formed by spraying a solution of carbon graphite over the steel sheets.

DE 101 12 744 A1 relates to a laser welding method for welding steel sheets, wherein a gap is provided between the steel sheets, and emissions being produced during welding can be removed by means of the gap. The gap is defined by small balls made of glass being arranged between the steel plates.

IP 08141761 (abstract) provides a method for laser welding of members by providing a clearance between the members, wherein a solvent containing bead-shaped spacers having the diameter equivalent to the dimension of the clearance is applied on lapped surfaces of the members to be welded. Gas being evaporated from plated layers of the members is discharged from the clearance formed by the spacers. DE 44 07 190 A1 disclosed a method for preparation of zinc-coated metal sheets for a subsequent step of laser welding. According to this method a projecting surface structure is created on the metal sheets by evaporating material of the metal sheets using high energy radiation.

JP 2001162388 (abstract) discloses a method of laser welding for plated steel plates wherein the plated steel plates are laminated to each other in a manner that a tip of a projecting part provided on one plated steel plate comes in contact with an upper surface of a second plated steel plate in order to define a gap. XP 000622042 (Graham, M. P. et al.: "Nd:YAG Laser Beam Welding of Coated Steels Using a Modified Lap Joint Geometry", Welding Journal, American Welding Society, Miami, FL, US, vol. 75, no. 5, 1 May 1996 (1996-05-01, pages 162-S-170-S, ISSN: 0043-2296) shows various arrangements of plated metal sheets for welding the metal sheets, wherein a groove-projection joint geometry of one metal sheet is used for providing a gap between the metal sheets.

JP 11226765 discloses a welding structure of galvanized steel sheets that exhausts an evaporation gas of a plating material of the galvanized steel sheets. In a pre-processing step, the galvanized steel sheets are provided with a rugged face forming the exhaust passage for the evaporation gas.

US 6 528 756 B2 discloses a laser lap welding process of welding together overlapped plated steel sheets. Parts of the upper plated steel sheet extending on the weld line are embossed to form bosses protruding toward the lower plated steel sheet. The bosses keep the joining surface of the upper plated steel sheet and the joining surface of the lower plated steel sheet spaced to form a gas discharge passage.

### SUMMARY OF THE INVENTION

There is disclosed a method of laser welding a number of coated metal sheets according to claim 1.

### BRIEF DESCRIPTION OF THE DRAWINGS

Figure 1 is a diagram illustrating the steps of punching an embossment into the coated metal part forming the embossment of the embodiment of the invention;

Figure 2 is a diagram illustrating the joining of two parts by laser welding having the embossments of the embodiment of the invention;

Figure 3 illustrates the joining of two coated metal sheets having fine particles disbursed between according to a second embodiment which represents background art.

### DETAILED DESCRIPTION OF THE PREFERRED EMBODIMENTS

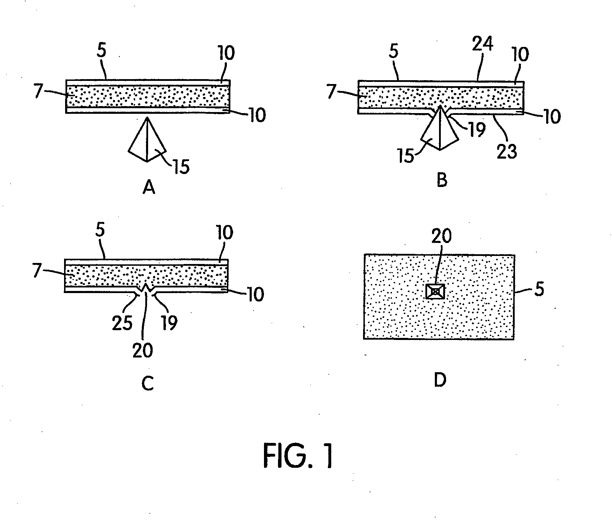

Referring to Figure 1, there is shown an illustration detailing the formation of a raised region 19 comprising an embossment 20 of the embodiment of the method of the present invention. Referring to Figure 1A, a coated sheet metal 5 is placed in a press (not shown) which may be associated with an assembly line or may be offline as required. A press for use by the present invention does not require the presence of mating male and female dies as is commonly utilized in the art. Rather the press for use by the present invention requires only an anvil like surface opposite the punch 15; thereby, significantly lowering the cost of tooling.

The coated metal sheet 5 comprises a metal core 7 having layers of coating 10 applied to at least one side and preferably both sides of the sheet 5. A four sided spear-shaped punch 15 is introduced above the coated sheet 5 to create an embossment 20 allowing for the venting of weld gases during a welding process. As shown in Figure 1A, the spear-shaped punch 15 is a four sided body that preferably comprises a coated metal allowing for repeated use and strength. The spear-shaped punch 15 may be introduced in the upper or lower part of a tool to create the embossment 20 of the present invention.

Referring to Figure 1B, the spear-shaped punch 15 lances the metal sheet 5 from a direction corresponding to a first surface 23, causing the material on a periphery 25 to rise to a given height. Preferably, the spear-shaped punch 15 does not penetrate the entire metal sheet 5 but only penetrates to a depth sufficient to cause a specific rise at the periphery 25 or edge of the embossment 20. The second surface 24 of the metal sheet 5, opposite the first surface 23, remains continuous and uninterrupted. The second surface may have a contour that is associated with the part, but does not include a raised region or depression from interaction with the punch 15. In a preferred aspect of the present invention, a raised edge of approximately 0,178 mm (0.007 inches) is formed by the spear-shaped punch 15.

Referring to Figure 1C, it can be seen that metal is left on the periphery 25 with a slight rise of material allowing for the zinc gas to slow at the interface: As there are no channels which the zinc gas has to follow, the problem of zinc gas solidification further away from the heat resulting in the loss of corrosion protection is avoided. The raised material at the periphery 25 creates a maximum amount of venting of zinc gas during the joining process resulting in an economic joining process easily maintained and controlled.

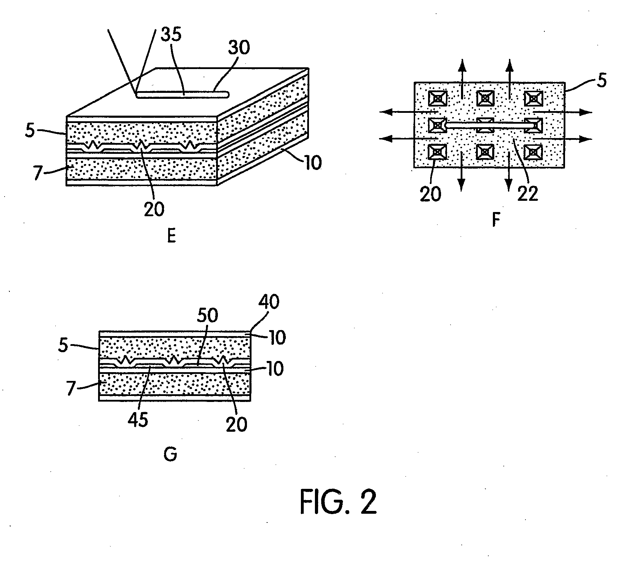

Referring to Figure 2, the process of the embodiment of the invention utilizing punched embossments 20 to vent weld gases is shown. Referring to Figure 2E, two metal sheets or parts 5 to be joined are shown, with one of them having the punched embossments 20 previously described with reference to Figure 1. Although only one part 5 is shown with the punched embossments 20, both parts 5 may include embossments 20 formed as described previously with reference to Figure 1. As can be seen in Figure 2E, a laser weld 30 is formed by energizing a beam and drawing it across the part at a weld joint 35. The laser heats the two metal sheets 5 smelting the parts 5 together along the weld joint 35 joining the two parts 5 together. The laser may be continuously drawn over the two metal sheets forming a continuous weld bead or may be energized intermittently to form welds in a specific location.

With reference to Figure 2F, there is shown a top view of a part having an array 22 of embossments 20 formed by punching as previously described with reference to Figure 1. The arrows indicate the flow of zinc gas formed by the introduction of the laser shown in Figure 2E. The array 22 or waffle area of embossments 20 allows the maximum flow of zinc gas formed by the laser to exit and flow without pressurizing and ejecting through the laser keyhole area of the weld joint 35.

With reference to Figure 2G, the joined part 40 is shown after the introduction of the laser, showing the zinc deposit 45 which forms in the weld area. The zinc gas vaporized by the joining process self-seals the gaps 50 between the two parts 5. As a result, the introduction of the laser should be limited to the minimum size area to be welded, due to the self-sealing effect of the solidification of the zinc gas.

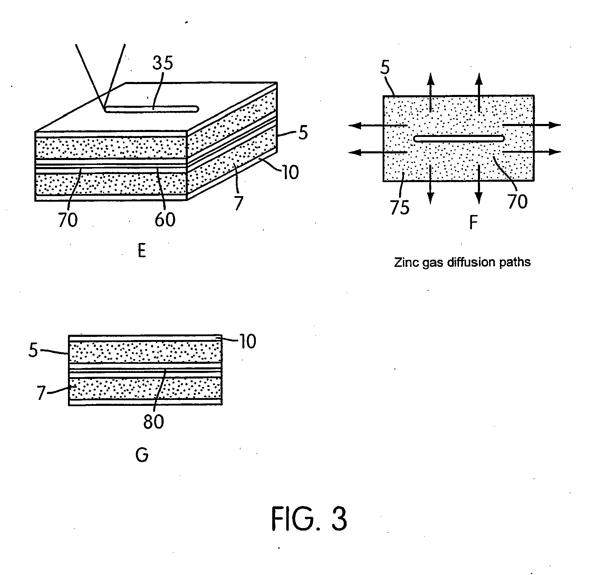

Referring to Figure 3, there is shown an embodiment which represents background art. As opposed to forming embossments 20, as described in the embodiment of the invention, fine particles 70 are distributed on the surface 75 of at least one of the sheet metal parts 5 to be joined; thereby, introducing a gap 60 between the two parts 5. The fine particles 70 may be loosely blown on the surface 75 or can be plasma sprayed onto the surface 75 of the coated sheet metal part 5. When using the plasma spraying technique, the particles 70 will be permanently bonded to the surface 75 before the two sheets 5 are joined. The introduction of fine particles 70 between the two sheets 5 will result in a gap 60 between the two sheets roughly the diameter of the particles. In a preferred aspect, zinc dust is preferably placed between the two parts 5 to maintain the coating and also create the gap 60 previously described with reference to the diameter of the particles 70. Alternatively, steel dust may be utilized creating a more permanent gap 60 due to the higher melting point of steel, as compared to zinc.

As previously described with reference to the embodiment of the invention, a laser weld is formed by energizing a laser to locally smelt the metal of the two parts 5 to be joined resulting in a laser weld joint 35. The zinc gas formed in the area by the laser is allowed to flow between the particles 70 introduced between the two sheet metal parts 5 thereby preventing the pressurization of zinc gas resulting in ejection through the laser keyhole area. Referring to Figure 4G, it can be seen that when zinc dust is utilized as the fine particle material 70, the zinc vaporizes and forms a deposit 80 in the weld area similar to the first embodiment. As a result, and as previously described with reference to the embodiment of the invention, it is desirable to minimize the size of the affected area due to the self-sealing effect of the solidification of the zinc gas.

## Claims

1. A method of laser welding a plurality of coated metal sheets, comprising the steps of:
providing coated sheets of metal (5) having opposed first (23) and second (24) surfaces;
creating a raised region (19) on at least one of the coated sheets (5), the raised region (19) formed on the first surface (23) and wherein the second surface (24) remains continuous and uninterrupted;
juxtaposing the coated sheets (5) to introduce a gap therebetween, said gap (50) defined by said raised region (19);
applying a laser beam forming a laser weld wherein gases produced during the forming of the laser weld escape via the gap (50), **characterized in that**
the step of creating a raised region comprises punching at least one embossment (20) on at least one coated metal sheet without penetrating the entire metal sheet (5) but only penetrating to a depth sufficient to cause a specific rise at the periphery (25) of the embossment (20) such that the embossment (20) comprises a depression having a raised peripheral edge, the second surface (24) not including a raised region or depresseion from interaction with the punch. wherein the step of creating a raised region comprises punching at least one embossment (20) on at least one coated metal sheet, the embossment comprising a depression having a raised peripheral edge.

2. The method of laser welding a plurality of coated metal sheets according to Claim 1 wherein said step of creating a raised region (19) comprises punching an array of embossments (20).

3. The method of laser welding a plurality of coated metal sheets according to Claims 1 and 2 wherein the raised peripheral edge has a thickness of about 0.178 mm (0.007 inches).

## Patentansprüche

1. Verfahren zum Laserschweißen einer Mehrzahl von beschichteten Metallblechen, mit den folgenden Schritten:
Bereitstellen beschichteter Metallbleche (5) mit einander gegenüberliegenden ersten und zweiten Oberflächen Oberfläche (23, 24),
Erzeugen eines erhöhten Bereichs (19) auf mindestens einem der beschichteten Bleche (5), wobei der erhöhte Bereich (19) auf der ersten Oberfläche (23) gebildet wird und wobei die zweite Oberfläche (24) kontinuierlich und ununterbrochen bleibt,
Anordnen der beschichteten Bleche (5) übereinander, um dazwischen einen Spalt zu bilden, wobei der Spalt (50) durch den erhöhten Bereich (19) definiert ist,
Anwenden eines Laserstrahls, um eine Laserschweißung zu bilden, wobei Gase, die während des Bildens der Laserschweißung erzeugt werden, durch den Spalt (50) entweichen,
**dadurch gekennzeichnet, dass**
der Schritt des Erzeugens eines erhöhten Bereichs das Stanzen mindestens einer Prägung bzw. Bosse (20) auf mindestens einem beschichteten Metallblech ohne Eindringen in das gesamte Metallblech (5), sondern lediglich durch Eindringen bis zu einer Tiefe, die ausreicht, um eine bestimmte Erhöhung an dem Umfang (25) der Prägung bzw. Bosse (20) hervorzurufen, derart, dass die Prägung bzw. Bosse (20) eine Vertiefung mit einer erhöhten Umfangskante aufweist, umfasst, wobei die zweite Oberfläche (24) keinen erhöhten Bereich und keine Vertiefung, die aus der Wechselwirkung mit dem Stanzstempel resultiert, aufweist.

2. Verfahren zum Laserschweißen einer Mehrzahl von beschichteten Metallblechen nach Anspruch 1, wobei der Schritt des Erzeugens eines erhöhten Bereichs (19) das Stanzen einer Anordnung von Prägungen (20) umfasst.

3. Verfahren zum Laserschweißen einer Mehrzahl von beschichteten Metallblechen nach Anspruch 1 und 2, wobei die erhöhte Umfangskante eine Dicke von etwa 0,178 mm (0,007 Zoll) aufweist.

## Revendications

1. Procédé de soudage au laser d'une pluralité de tôles métalliques revêtues, comprenant les étapes consistant à :
fournir des tôles revêtues de métal (5) ayant une première surface (23) et une seconde surface (24) opposées ;
créer une région relevée (19) sur l'une au moins des tôles revêtues (5), la région relevée (19) étant formée sur la première surface (23), et dans laquelle la seconde surface (24) reste continue et sans interruption ;
juxtaposer les tôles revêtues (5) pour introduire un intervalle entre elles, ledit intervalle (50) étant défini par ladite région relevée (19) ;
appliquer un faisceau laser en formant une soudure au laser de manière que les gaz produits pendant la formation de la soudure laser s'échappent via l'intervalle (50), **caractérisé en ce que**
l'étape de création d'une région relevée comprend de poinçonner au moins un bossage (20) sur au moins une tôle métallique revêtue sans pénétrer la totalité de la tôle métallique (5) mais en pénétrant seulement jusqu'à une profondeur suffisante pour provoquer un relèvement spécifique à la périphérie (25) du bossage (20), de sorte que le bossage (20) comprend une dépression ayant un bord périphérique dressé, la seconde surface (24) n'incluant pas de région relevée ni de dépression par interaction avec le poinçon.

2. Procédé de soudage au laser d'une pluralité de tôles métalliques revêtues selon la revendication 1, dans lequel ladite étape de création d'une région relevée (19) comprend de poinçonner un réseau de bossages (20).

3. Procédé de soudage au laser d'une pluralité de tôles métalliques selon les revendications 1 et 2, dans lequel le bord périphérique dressé a une épaisseur d'environ 0,178 mm (0,007 pouces).
